# EUROPEAN PATENT APPLICATION

(11) **EP 4 759 521 A1**
(43) Date of publication of application: **17.06.2026**
(21) Application number: 25223982.7
(22) Date of filing: 16.12.2025
(51) Int. Cl.: B29C 65/36, B29C 65/56

(54) **METHODS OF FORMING COMPOSITE TUBE ASSEMBLIES USING INDUCTION HEATING**

(30) Priority: 16.12.2024 US 202463734579 P; 15.12.2025 US 202519420347
(71) Applicant: Avtechtyee, Inc., Everett, WA 98203 (US)
(72) Inventor: GREENSTREET, Matthew Charles Sheldon, 98021 Bothell (US); RAFINER, Nicolas Karl, 98012 Mill Creek (US)
(74) Representative: Calysta NV

(57) **Abstract**

A method of connecting one or more fittings to a composite tube includes induction heating the composite tube to its gel transition temperature, inserting a first fitting into a first end portion of the tube after the induction heating, and compressing the first end portion of the tube over the first fitting.

## Description

### CROSS REFERENCE TO RELATED APPLICATION

This application is based upon and claims priority on U.S. Provisional Application No. 63/734,579 filed on December 16, 2024, the contents of which are fully incorporated herein by reference.

### BACKGROUND

Composite materials offer high stiffness and/or strength-to-weight ratios. Control rods and linkages are formed from composite materials and are used for transferring loads in structures such as aircraft or spacecraft. Typical control rods or linkages may be tubular or solid in nature.

In vehicles such as aircraft, it is beneficial to use control rods or linkages in the form of composite tube assemblies rather than metal tube assemblies. They are lighter and stronger than comparable metal tube assemblies. A composite tube assembly incorporates a composite tube which is typically formed from a carbon fiber composite material which is formed by impregnating carbon fibers with resin and curing the same. As such, a carbon fiber composite material tube assembly is lighter in weight, more resistant to corrosion, stronger and more inert relative to a substantially metallic tube assembly. Composite tube assemblies may be used in multiple applications, as for example as control rods or in an overhead luggage bin (or stow bin) assemblies in an aircraft to provide structural support both when the bin is in an open configuration and when it is closed. Composite tube assemblies may also be used as structural inserts in vehicle frames.

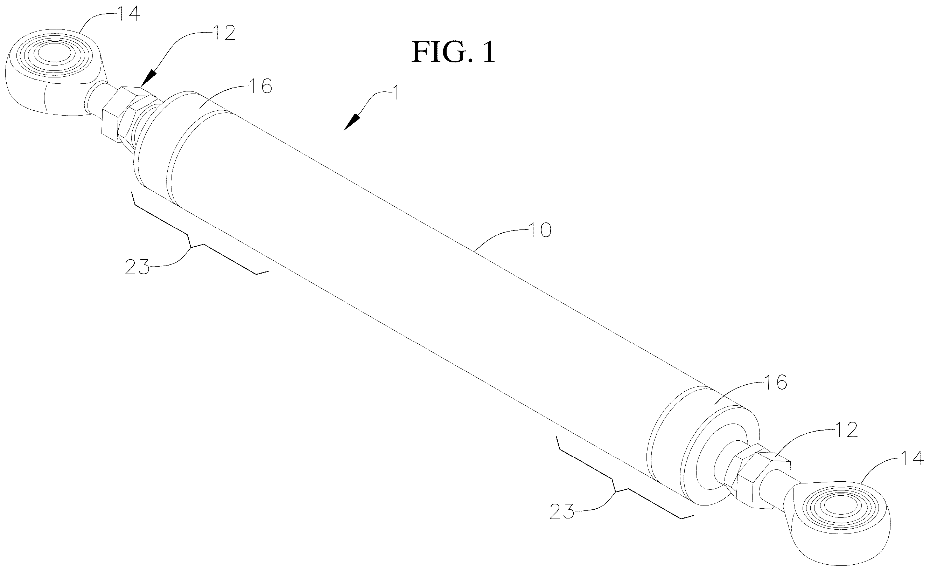

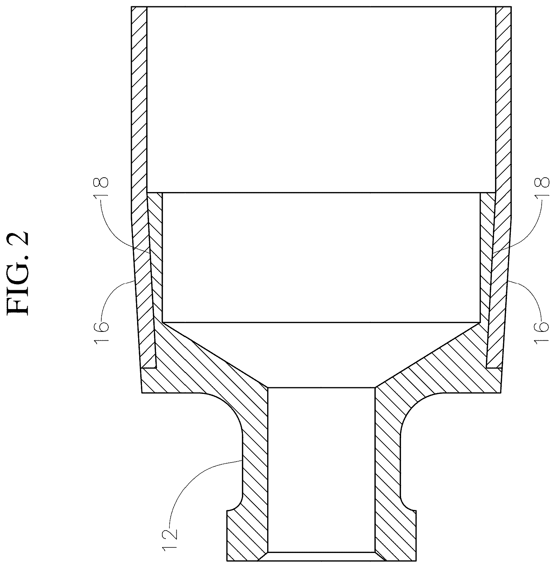

Composite tube assemblies 1 incorporate a fitting or insert 12 (individually and collectively referred to herein for convenience as "fitting"), such as a Hylock fitting, at each end of the composite tube, as for example shown in FIG. 1. A clevis bolt, rod end, or other type of connecting insert 14 is connected, e.g., threaded, to the fitting 12. Each composite tube end portion 16 is mated over an outer surface 18 of its corresponding fitting, as for example shown in FIGS. 1 and 2. A typical fitting is described on U.S. Patent No. 8,205,315, the contents of which are fully incorporated herein by reference. To connect the fittings to the composite tube, the fittings are inserted into the opposite ends of the composite tube, and the corresponding end portions 16 of the composite tube are compressed over their corresponding fittings 12 to form the composite tube assembly, as for example shown in FIGS. 1 and 2. Typically, the composite tube is placed in a forming machine inside of a heating chamber where it is heated to its gel transition temperature (i.e., the gel transition temperature of the carbon fiber composite material itself). This typically takes about an hour or so. Once the gel transition temperature is reached, a fitting is inserted into the composite tube end and its corresponding end portion is pressed over the fitting. The composite tube with inserted fitting is then allowed to cool down (typically for an hour or so). The process is repeated for connecting another fitting on the opposite end of the composite tube. A more robust efficient method for connecting the fittings to the composite tubes is desired.

### SUMMARY

In an example embodiment, a method of connecting one or more fittings to a composite tube includes induction heating at least a portion of the composite tube to its gel transition temperature, inserting a first fitting into a first end portion of the tube after the induction heating, and compressing the first end portion of the tube over the first fitting. In one example embodiment, the composite tube is a carbon fiber composite tube. In another example embodiment, induction heating the composite tube includes placing the composite tube within an induction coil and flowing a current through the induction coil for induction heating of the composite tube. In one example embodiment, the method also includes controlling the current flowing through the induction coil for controlling the rate of induction heating of the composite tube by the induction coil. In yet another example embodiment, induction heating the composite tube includes placing only a first portion of the composite tube including the first end portion of the composite tube in the induction coil. In a further example embodiment, the method also includes inserting a second fitting into a second end portion of the composite tube opposite the first end portion, and compressing the second end portion over the second fitting. In yet a further example embodiment, induction heating the composite tube includes induction heating only the first portion of the composite tube including the first end portion and a second portion of the composite tube including the second end portion of the composite tube spaced apart from the first portion to their gel transition temperatures. In one example embodiment, induction heating the composite tube, includes placing the first end portion of the composite tube within the induction coil and induction heating the first end portion, and then placing the second end portion of the composite tube within the induction coil induction heating the second end portion. In another example embodiment, the induction coil is a first induction coil and induction heating the composite tube includes placing the first end portion of the composite tube in the first induction coil and placing the second end portion of the composite tube in the second induction coil and flowing current through the second induction coil for induction heating the second end portion. In yet another example embodiment, the method further includes controlling a rate of the current flowing through the second induction coil for controlling a rate of induction heating of the second end portion of the composite tube by the second induction coil. In a further example embodiment, induction heating at least a portion of the composite tube to its gel transition temperature includes induction heating the first end portion of the composite tube. In yet another example embodiment, induction heating at least a portion of the composite tube to its gel transition temperature further includes induction heating a second end portion of the composite tube opposite the first end portion. In one example embodiment, the method also includes inserting a second fitting into the second end portion of the tube after the induction heating of the second end portion, and compressing the second end portion of the tube over the second fitting.

### BRIEF DESCRIPTION OF THE DRAWINGS

FIG. 1 is a perspective view of a composite tube assembly.
FIG. 2 is a partial cross-sectional view of an end section of a composite tube assembly.
FIG. 3 is a plan view of an example embodiment induction coil surrounding a composite tube vertically in line with a forming machine.
FIG. 4 is a plan view of two example embodiment induction coils surrounding end portions of a composite tube.
FIG. 5 is a plan view of another example embodiment induction coil surrounding a composite tube horizontally in line with a forming machine.

### DETAILED DESCRIPTION

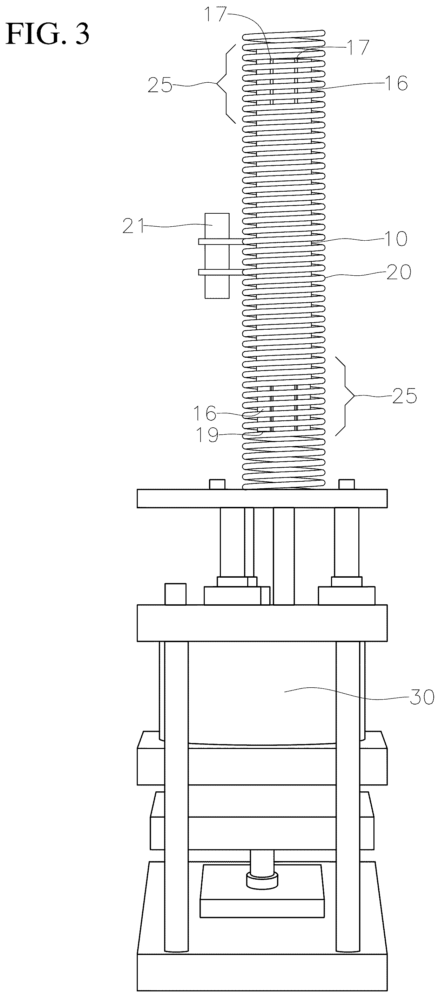

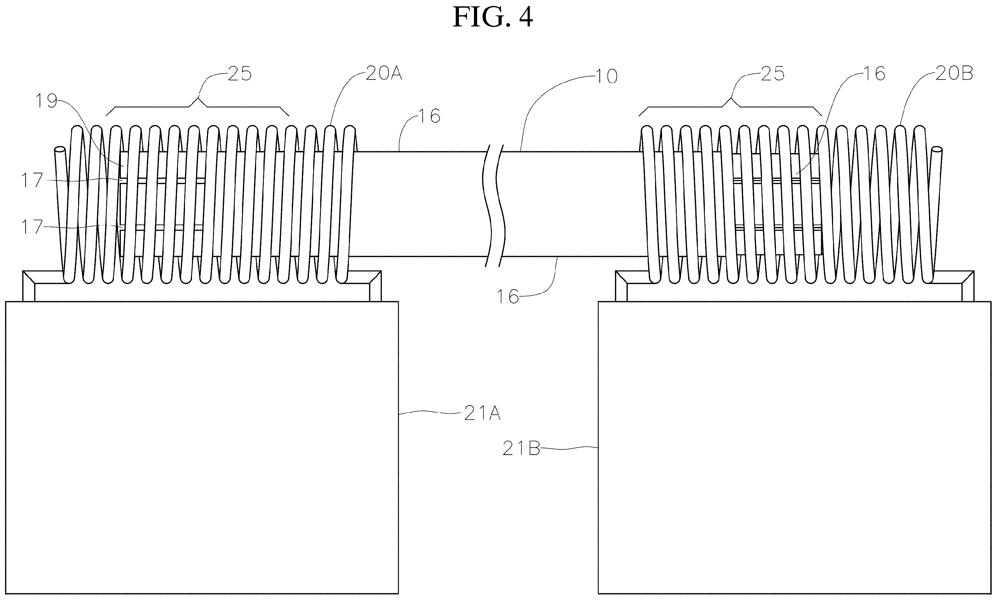

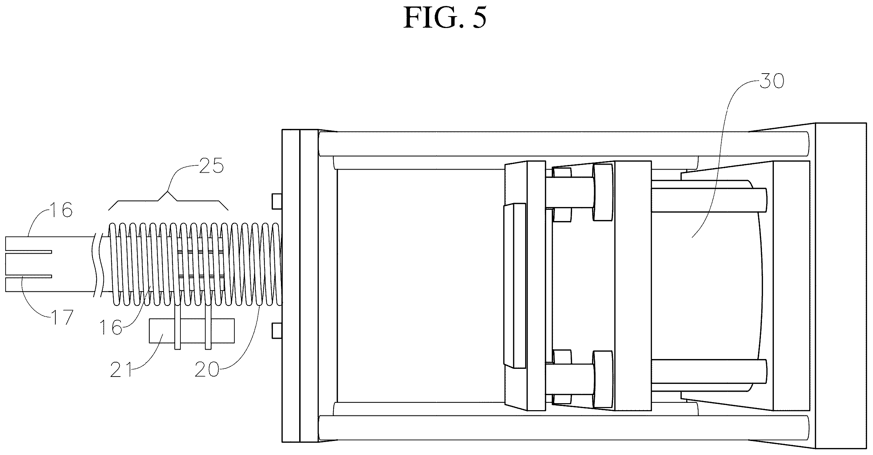

In an example embodiment, to install the fittings 12, a composite tube 10 is placed within an induction coil 20, such that the induction coil surrounds the carbon fiber composite tube, as for example shown in FIG. 3. In an example embodiment the composite tube 10 is a carbon fiber composite tube. In an example embodiment, power to the induction coil is delivered and controlled by a control box 21. The induction coil heats the carbon fiber composite tube through induction by controlling the current flowing through the induction coil. In this regard the rate of heating can be controlled. Applicant discovered that composite tube can be heated to the gel transition temperature of the carbon fiber composite material forming the carbon fiber composite tube. This is expected to take between 10 to 15 minutes which is about 25% or less of the time it takes to heat the tube is a conventional heating chamber. Once an end portion 16 of composite tube is heated to its gel transition temperature, the fitting 12 is inserted through a heated end 19 into end portion 16 of the heated carbon fiber tube, and the material forming the end portion 16 of the heated composite the tube is compressed over the fitting. The process is then repeated by heating with the induction coil the opposite end portion of the carbon fiber composite tube and inserting a second fitting therein. The opposite end portion of the heated composite material forming the tube is then compressed over the second fitting. In an example embodiment both tube end portions 16 are heated simultaneously through induction, as for example shown in FIG. 3. This may also be accomplished by using two separate shorter induction coils 20a, 20b, each surrounding only each end portion 25 of the carbon composite material tube, as for example shown in FIG. 4. The induction coils 20A, 20B may receive power from a single control box or from separate control boxes 21A, 21B as for example shown in FIG. 4. In an example embodiment a single coil may be used that surrounds both end portions of the carbon composite material tube, as for example shown in FIG. 3. In an example embodiment the induction coil, as shown in FIG. 3, does not heat the entire carbon composite material tube but only spaced apart end portions 25 of the composite tube including their corresponding composite tube end portions 16. In another example embodiment, such induction coil heats the entire tube, however, the rate of heat applied to the opposite portions of the composite material tube may be different than that applied to the remainder of the tube such that the tube end portions reach their gel transition temperature before the remaining tube. In a further example embodiment, a shorter coil 20 is used that surrounds only a portion 25 of the composite tube 20 including end portion 16, as for example shown in FIG. 5. With this embodiment, the shorter coil 20 is used to heat one end portion of the composite tube to its gel transition temperature at a time.

In an example embodiment, the coil is aligned with a forming machine 30 that may be used to insert each fitting 12 into its corresponding heated end portion 16 of the composite tube, as for example shown in FIG. 3. Once the composite tube is heated to the appropriate temperature (e.g., its gel transition temperature) by the coil it is slid into the forming machine which inserts the fitting 12 into the composite tube end portion 16 through the end 19 and compresses the composite tube end portion 16 over the fitting. In one example embodiment, the longitudinal axis of the coil and the forming machine are vertically aligned such that the composite tube is vertically received into the coil and then moved along a vertical path into the forming machine, as for example shown in FIG. 3. The forming machine in example embodiment is adjacently below the induction coil, as for example shown in FIG. 3. In another example embodiment, it is adjacently above the induction coil. In another example embodiment the induction coil (and its longitudinal axis) and the forming machine are horizontally aligned as for example shown in FIG. 5. In this regard, the composite tube is moved horizontally into the induction coil, and after it is heated by the induction coil, is it moved and received horizontally into the adjacent forming machine. In other example embodiments, the induction coil longitudinal axis and the forming machine are aligned at an angle such that the alignment is not horizontal or vertical.

In an example embodiment, each tube end portion 16 may have axial slots 17.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted or described in a particular order, this should not be understood as requiring that such operations be performed in the particular order shown/described or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A method of connecting one or more fittings to a composite tube comprising:
induction heating at least a portion of the composite tube to its gel transition temperature;
inserting a first fitting into a first end portion of the tube after said induction heating; and
compressing the first end portion of the tube over the first fitting.

2. The method as recited in claim 1, wherein the composite tube is a carbon fiber composite tube.

3. The method as recited in claim 1 or 2, wherein induction heating the composite tube comprises placing said composite tube within an induction coil and flowing a current through the induction coil for induction heating said composite tube within the induction coil.

4. The method as recited in claim 3, further comprising controlling a rate of the current flowing through the induction coil for controlling a rate of induction heating of the composite tube by the induction coil.

5. The method as recited in claim 3, wherein induction heating the composite tube comprises placing only the first end portion of the composite tube in the induction coil.

6. The method as recited in any of claims 1 to 4**,** further comprising:
inserting a second fitting into a second end portion of the composite tube opposite the first end portion; and compressing the second end portion over the second fitting.

7. The method as recited in claim 6, wherein induction heating the composite tube comprises induction heating only the first end portion and the second end portion of the composite tube to their gel transition temperatures.

8. The method as recited in claim 7, wherein induction heating the composite tube, comprises:
placing the first end portion of the composite tube within the induction coil and induction heating the first end portion; and
placing the second end portion of the composite tube within the induction coil induction heating the second end portion.

9. The method as recited in claim 7, wherein the induction coil is a first induction coil and wherein induction heating the composite tube comprises:
placing the first end portion of the composite tube in the first induction coil; and
placing the second end portion of the composite tube in the second induction coil and flowing current through the second induction coil for induction heating the second end portion.

10. The method as recited in any of claims 6 to 9, further comprising controlling a rate of the current flowing through the second induction coil for controlling a rate of induction heating of the second end portion of the composite tube by the second induction coil.

11. The method as recited in claim 1, wherein induction heating at least a portion of the composite tube to its gel transition temperature comprises induction heating the first end portion of the composite tube.

12. The method as recited in claim 11, wherein induction heating at least a portion of the composite tube to its gel transition temperature further comprises induction heating a second end portion of the composite tube opposite the first end portion.

13. The method as recited in claim 12, further comprising:
inserting a second fitting into the second end portion of the tube after said induction heating of said second end portion; and compressing the second end portion of the tube over the second fitting.
